(19) Europäisches Patentamt
European Patent Office
Office européen des brevets

(11) EP 2 132 143 B1

# (12) EUROPEAN PATENT SPECIFICATION

(45) Date of publication and mention of the grant of the patent:
**26.12.2012 Bulletin 2012/52**

(21) Application number: **08729935.0**

(22) Date of filing: **15.02.2008**

(51) Int Cl.:
***C02F 1/42*** *(2006.01)* ***B01J 41/04*** *(2006.01)*
***B01J 41/12*** *(2006.01)*

(86) International application number:
**PCT/US2008/054042**

(87) International publication number:
**WO 2008/101137 (21.08.2008 Gazette 2008/34)**

## (54) SYSTEM AND PROCESS FOR THE REMOVAL OF FLUOROCHEMICALS FROM WATER

SYSTEM UND VERFAHREN ZUR ENTFERNUNG VON FLUORCHEMIKALIEN AUS WASSER

SYSTÈME ET PROCÉDÉ POUR L'EXTRACTION DE PRODUITS FLUOROCHIMIQUES À PARTIR D'EAU

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.02.2007 US 890211 P**

(43) Date of publication of application:
**16.12.2009 Bulletin 2009/51**

(73) Proprietor: **3M Innovative Properties Company**
**Saint Paul, MN 55133-3427 (US)**

(72) Inventors:
- **MADER, Brian T.,**
**Saint Paul, Minnesota 55133-3427 (US)**
- **KLUN, Thomas P.,**
**Saint Paul, Minnesota 55133-3427 (US)**
- **IYER, Suresh S.,**
**Saint Paul, Minnesota 55133-3427 (US)**

(74) Representative: **Vossius & Partner**
**Siebertstrasse 4**
**81675 München (DE)**

(56) References cited:
**WO-A-97/31864**
**WO-A-2006/022863**
**US-A- 6 074 537**
**US-A1- 2004 010 156**
**US-A1- 2004 232 068**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 132 143 B1

## Description

The present invention relates to a method for the removal of fluorochemicals from water.

Fluorochemicals have been used in a wide variety of applications including the waterproofing of materials, as protective coatings for metals, as fire-fighting foams for electrical and grease fires, for semi-conductor etching, and as lubricants. Reasons for such widespread use of fluorochemicals include their favorable physical properties which include chemical inertness, low coefficients of friction, and low polarizabilities (i.e., fluorophilicity). Types of fluorochemicals include perfluorinated surfactants, perfluorooctane sulfonate (PFOS) and perfluorooctanoate (PFOA).

While valuable as commercial products, fluorochemicals can be difficult to treat using conventional environmental remediation strategies or waste treatment technologies. Fluorochemicals can be removed from water using an adsorbent media such as granular activated carbon (GAC). However, improvements in systems and methods for the removal of fluorochemicals from water are desired.

US 2004/00/0156 discloses separation of an anionic fluorochemical surfactant from an aqueous solution containing the anionic fluorochemical surfactant.

The present invention provides improvements in systems and methods for the removal of fluorochemicals from water. In one aspect, the present application discloses a system for the removal of fluorochemicals from water, comprising:

A vessel containing the ion exchange resin, the ion exchange resin comprising an insoluble matrix having functional groups bonded thereto, the functional groups comprising amines of the formula:

$$- N(R_1R_2R_3)$$

Where
N is nitrogen; and
$R_1$, $R_2$ and $R_3$ are hydrocarbon groups and can be the same or different, normal, branched and/or partially or fully substituted (e.g., fluorinated) and having a carbon chain length of $C_1$ or greater, the hydrocarbon chain optionally including polar groups (e.g., O, N, S);

An inlet for directing a flow of water into the vessel to thereby contact the ion exchange resin; and
An outlet for directing a flow of water out of the vessel.

The invention provides a process for the removal of fluorochemicals from water, the process comprising:

Exposing water comprising fluorochemicals to an ion exchange resin, the resin comprising an insoluble matrix having functional groups bonded thereto, the functional groups comprising amines of the formula:

$$- N(R_1R_2R_3)$$

Where
N is nitrogen; and
$R_1$, $R_2$ and $R_3$ are hydrocarbon groups and can be the same or different, normal, branched and/or partially or fully substituted (e.g., fluorinated) and having a carbon chain length of $C_1$ or greater, the hydrocarbon chain optionally including polar groups (e.g., O, N, S) as defined in claim 1 or amines stated in claim 1;
Maintaining the water in contact with the resin for a period of time; and Separating the water from the resin.

The terms used herein shall have their ordinary meaning as known to a person of ordinary skill in the art. However, certain terms will be understood to have the meanings set forth herein

"Fluorochemical" means a halocarbon compound in which fluorine replaces some or all hydrogen molecules.

In describing the embodiments of the invention herein, reference is made to the various drawings, wherein:

Figure 1 is schematic of a system for the removal of fluorochemicals according to the invention;

Figure 2 is an isotherm for the removal of PFOA from water using different adsorbents according to the invention;

Figure 3 is an isotherm for the removal of $PFH_xS$ from water using different adsorbents according to the invention;

Figure 4 is an isotherm for the removal of PFOA from water using different adsorbents according to the invention;

Figure 5 is an isotherm for the removal of PFOS from water using different adsorbents according to the invention; and

Figure 6 is an isotherm for the removal of PFOS from water using different adsorbents according to the invention.

The present invention provides processes as defined by claims 1-10 to facilitate the removal of fluorochemicals from water. In some embodiments, the invention provides adsorbent materials ("adsorbents") in the form of ion exchange resins that are useful in the removal of fluorochemicals from water. In other embodiments, the invention provides a system for the treatment of water, the system including incorporating the aforementioned adsorbents therein. The present invention provides methods for the removal of fluorochemicals from water utilizing the aforementioned adsorbents and system.

Ion exchange is a process in which ions are exchanged between a solution and an ion exchanger, typically an insoluble solid or gel which may be treated to include functional groups. Anion exchangers are used for negatively charged anions. Cation exchangers are used for positively charged cations. Ion exchange can be a reversible process in that the ion exchanger can be regenerated or loaded by washing the ion exchange resin with an excess of the ions to be exchanged (e.g., chloride ions, potassium ions, etc.).

In embodiments of the invention, one or more ion exchange resins are utilized. Such ion exchange resins include an insoluble matrix, substrate or support structure. In some embodiments, the support structure is in the form of small spherical beads having an average diameter ranging from about 1 mm to about 2 mm. In some embodiments, the support structure is a polymeric substrate. The surface of the polymeric substrate includes sites that trap and release ions. In some embodiments, the ion exchange resins useful in the present invention may be based on one or more polymeric materials which may or may not be crosslinked. In some embodiments, the substrates are based on styrene that has been crosslinked with a cross-linker such as divinyl benzene, for example. Crosslinked polymeric substrates may also be porous, and a crosslinked substrate will tend to be hard and not malleable. Polymeric substrates that are not crosslinked can be softer and more malleable than a crosslinked substrate and can have a gel-like consistency, depending on the material used.

In some embodiments, the ion exchange resin can comprise a matrix material in the form of non-spherical particles. In still other embodiments, the matrix can comprise a material that is more amorphous or gel-like such as silica gel, diatomaceous earth, clay, or the like.

In embodiments of the invention, ion exchange resins are used in processes for the removal of fluorochemicals from water. Exemplary fluorochemicals include those that are fully or partially saturated with fluorine. Fluorochemicals can vary in the length of their carbon backbone from a $C_1$ backbone up to $C_8$ and longer. Some fluorochemicals that are removable from water include, for example, perfluorobutanoate, (PFBA), perfluorobutane sulfonate (PFBS), perfluorooctanoate (PFOA), perfluorohexane sulfonate (PFHxS); and perfluorooctane sulfonate (PFOS). These fluorochemicals are derived from strong fluorochemical acids (e.g. perfluorobutanoate is derived from perfluorobutanoic acid) and exist as anions in aqueous solution. In some embodiments, the systems and processes of the invention utilize ion exchange resins capable of removing fluorochemicals from water at levels ranging from parts per billion (ppb) (e.g., ng/mL) to parts per million (ppm) (e.g., mg/L). In some embodiments, the systems and processes will remove the fluorochemicals at concentrations of less than about 1 ppb. It will be appreciated that exact limits will vary depending on the specific chemical identity of the fluorochemical as well as the measurement equipment being used.

The present application discloses the ion exchange resins comprising anion exchange resins having a matrix (either porous or gel-like) with functional groups attached thereto. Suitable functional groups include one or more quaternary amines of Formula I:

$$-N(R_1R_2R_3) \qquad I$$

Where

N is nitrogen; and

$R_1$, $R_2$ and $R_3$ are hydrocarbon groups and can be the same or different, normal, branched and/or partially or fully substituted (e.g., fluorinated) and having a carbon chain length of $C_1$ or greater, the hydrocarbon chain optionally including polar groups (e.g., O, N, S).

The present application discloses functional groups including quaternary amines of the Formula I where $R_1$, $R_2$ and/or $R_3$ are $C_1$ to $C_{18}$ alkyl groups, in some embodiments $C_1$ to $C_4$ alkyl groups. In some embodiments, the alkyl groups are the same. Exemplary of these functional groups are trimethylamine, triethylamine, tripropylamine, tributylamine. Combinations of the foregoing functional groups are also contemplated where $R_1$, $R_2$ and $R_3$ are $C_1$ to $C_{18}$ alkyl groups, in some embodiments $C_1$ to $C_4$ alkyl groups, but the alkyl groups are some combination of methyl, ethyl, propyl and butyl. In all embodiments, a hydrocarbon chain may optionally include polar groups (e.g., O, N, S).

The present application discloses ion exchange resins including quaternary amines of the Formula I where $R_1$, $R_2$ and/or $R_3$ are hydrocarbon groups having a carbon chain length greater than $C_4$, in some embodiments ranging from $C_5$ to $C_{18}$, wherein the hydrocarbon groups can be identical as well as where the hydrocarbon groups are different from one another, and any of the hydrocarbon groups may optionally include polar groups (e.g., O, N, S).

The present application discloses functional groups including quaternary amines of the Formula I where at least one of the hydrocarbon groups $R_1$, $R_2$ and $R_3$ can be a $C_1$ to $C_4$ alkyl group and another of $R_1$ $R_2$ and $R_3$ is a hydrocarbon groups having a carbon chain length greater than $C_4$. Any of the hydrocarbon groups may optionally include polar groups (e.g., O, N, S).

The present application discloses the ion exchange resin of the present invention being a 'difunctional' resin comprising two or more different quaternary amine groups. For example, a single ion exchange resin may comprise the quaternary amine groups $+N(C_2H_5)_3$ and $+N(C_6H_{13})_3$. Any of the hydrocarbon groups may optionally include polar groups (e.g., O, N, S).

Suitable ion exchange resins for use in the processes of the invention are available commercially such as those available from Dow Chemical Company under the trade designations DOWEX 1, DOWEX 1x8, DOWEX NSR-1, DOWEX PSR-2, and DOWEX PSR-3. A suitable difunctional ($N(C_2H_5)_3$ and $N(C_6H_{13})_3$) ion exchange resin is commercially available from Purolite Company of Philadelphia, PA under the trade designation "Purolite A530 E." Another commercially available silica based ion exchange adsorbent is available from Silicycle of Quebec, Canada under the trade designation "Silicycle TBA Chloride."

The present application discloses the ion exchange resins useful in the system and process including quaternary amine functional groups selected from the group consisting of: $+N(C_8H_{17})_3$, $+N(C_6H_{13})_3$, $+N(CH_3)_2(C_6H_{13})$, $+N(CH_3)_2(C_{12}H_{25})$, $+N(CH_3)_2(C_{16}H_{33})$, $+N(CH_3)_2(C_{18}H_{37})$, $+N(CH_3)_2CH_2CH_2C_6F_{13}$, $+N(CH_3)_2CH_2CH_2N(CH_3)SO_2C_4F_9$, $+N(C_4H_9)_3$, $+N(C_2H_5)_3$, $+N(CH_3)_3$, and combinations of two or more of the foregoing.

Suitable ion exchange resins may be prepared by the chemical modification of any of a variety of resins. In some embodiments, a suitable resin may be prepared by synthesis using a known resin material as a reactant. In one embodiment, a suitable ion exchange resin is prepared by the reaction of a chloromethylated styrene bead (or other electrophilic group-containing resin) with a tertiary amine such as, for example, trimethyl amine, triethylamine, tri-n-butylamine, tri-n-hexylamine, tri-n-octyl amine, and $C_4F_9SO_2\text{-}N(CH_3)\text{-}CH_2CH_2\text{-}N(CH_3)_2$, often in a polar aprotic solvent such as N,N-dimethylformamide. The reaction of the tertiary amine and the chloromethylated styrene bead is represented by reaction A:

Reaction A:

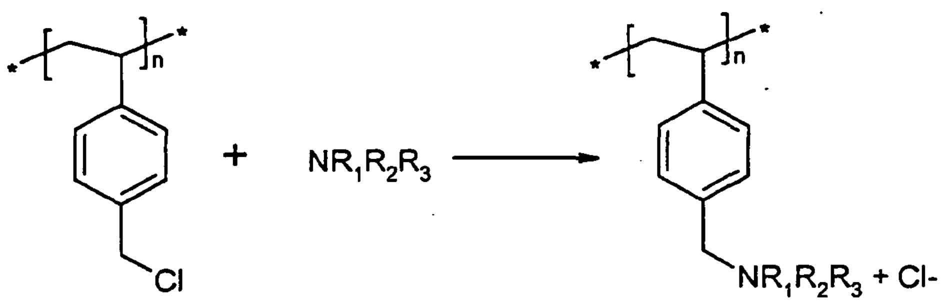

Wherein:

$R_1$, $R_2$, $R_3$ are as previously described.

In some embodiments, a suitable resin may be prepared by synthesis from quaternization of a tertiary amine based ion exchange resins. The same embodiments, ion exchange resins are prepared by the reaction of a tertiary amine functional resin with an electrophile such as organic halide (1-bromohexane, 1-chlorohexane, 1-bromododecane, 1-chlorododecane, 1-chlorohexadecane, and 1-bromooctadecane) or other electrophiles such as mesylates and tosylates of alcohols, such as $C_6F_{13}CH_2CH_2OSO_2CH_3$, often in a polar aprotic solvent such as N,N-dimethylformamide. The reaction of a tertiary amine functional resin with an electrophile is represented by reaction B:

Reaction B:

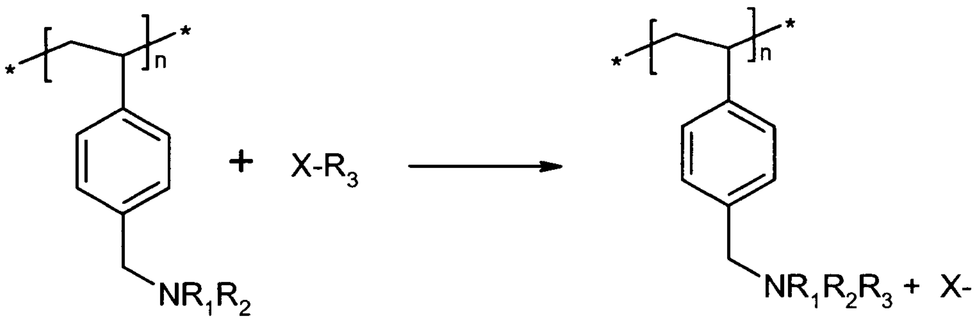

Wherein:

$R_1$, $R_2$, $R_3$ are as previously described; and
X is halogen.

The foregoing reactions are illustrated on a styrene matrix and are provided solely as examples in the preparation of ion exchange resins for use in the present invention. Those skilled in the art will appreciate that resins within the scope of the invention can comprise matrix materials other than styrene. Suitable matrix materials include without limitation polymers, gels, clays, diatomaceous earth and combinations of two or more of the foregoing. In some embodiments, a suitable polymer matrix is polystyrene. In some embodiments, a suitable gel matrix is silica gel.

The invention provides for the removal of fluorochemicals from water utilizing ion exchange resins having an adsorption capacity surprisingly greater than traditional adsorbents such as granular activated carbon.

Referring now to the Figures, Figure 1 schematically illustrates an ion exchange system **10** for the removal of fluorochemicals from water, according to the present invention. The system **10** includes a flow-through vessel **12** which can be provided in any of a variety of configurations. In the depicted embodiment, the vessel **12** is cylindrical column having an ion exchange bed **14** comprised of ion exchange resin contained within the vessel **12.** The ion exchange resins within the bed **14** are those described herein. An inlet **16** at a first end of the vessel **12** allows for the introduction of untreated water into the vessel **12.** The water is pumped into the vessel **12** through the inlet **16** and through the ion exchange bed **14.** Fluorochemicals and other contaminants in the water stream are removed from the water by the ion exchange mechanism provided by the resins in the ion exchange bed **14.** Treated water is directed out of the vessel **12** through an outlet valve **18** at the opposite end of the vessel from the inlet **16.**

In all embodiments, untreated water comprising fluorochemicals is exposed to an ion exchange resin for a sufficient period of time to have the fluorochemicals within the untreated water be adsorbed onto the resins in an ion exchange process that substitutes the fluorochemicals for another anion such as chloride, for example. Exposing the untreated water to the resins can be accomplished in any manner. In a process incorporating the ion exchange system **10** of Figure 1, an ion exchange bed is provided within a vessel that includes in inlet valve and an outlet valve. Untreated water is directed into the vessel through the inlet valve and through the ion exchange bed where fluorochemicals are removed. The thus treated water comprises a lowered level of fluorochemicals and exits the vessel through the outlet valve. The flow may be directed from the outlet valve to another treatment station for further reduction of fluorochemicals or for removal or treatment to remove or neutralize other impurities.

In other embodiments, an amount of untreated water can be placed within a vessel along with an adequate amount of ion exchange resin. The amount of resin within the vessel is typically selected to provide adequate ion exchange capacity to adsorb an expected loading of fluorochemical. The vessel can be shaken or the contents stirred or agitated in some manner so that the fluorochemicals are adequately adsorbed onto the resins and the ion exchange process is completed. The water and resin may then be separated (e.g., by centrifuging, filtering and/or decanting) to yield a volume of treated water.

Use of the aforementioned ion exchange resins in systems and processes for the removal of fluorochemicals has provided materials possessing an adsorption capacity at least equivalent to, and often greater than, granulated carbon. In some embodiments, the exhibited adsorption capacity is greater than granulated carbon by a factor of up to about 3, in some embodiments up to about 5, and in some embodiments up to about 35. As compared to traditional granulated carbon, the ion exchange resins utilized in the present invention are estimated to allow for a longer period of effectiveness, thus allowing a longer operating time by a factor of up to at least about 3 (*i.e.,* treat 3 times more water) In any ion exchange column, reasonable care should be taken to deal with the precipitation of carbonate minerals as well as iron oxides. Ion exchange resins can alter the ionic composition of the water with ions such $Cl^-$ or $OH^-$, replacing

$CO_3^{2-}$, $HCO_3^-$,$SO_4^{2-}$ and $NO_3^-$ present in the untreated water. Using systems and processes according to the present invention, fluorochemicals can be removed by the ion exchange resins even after breakthrough of alkalinity and sulfate from the ion exchange column, indicating that the fluorochemicals were able to compete for ion exchange binding sites despite large differences in the levels of alkalinity and sulfate (ppm levels) as compared to the fluorochemicals (ppb levels).

In some embodiments, performance may also be a function of the degree to which the matrix material is crosslinked. As the degree of crosslinking increases, the performance of the ion exchange resin also increases. For a given type of functional group (*i. e.* a tri-methyl quaternary amine) the greater the degree of crosslinking, the higher the adsorption capacity. Therefore resin structure does have an effect on resin adsorption. Improved performance of the ion exchange resins has also been seen as the number of carbons on the quaternary amine group increased. In some embodiments, the adsorption capacity of the resins in units of mass of fluorochemical adsorbed per mass of adsorbent are a factor 2 to 4 times higher than commonly used granular activated carbon. In some embodiments, the adsorption capacity of the resins in units of mass of fluorochemical adsorbed per mass of adsorbent are a factor of more than 4 times higher than commonly used granular activated carbon. In some embodiments (e.g., tri-hexyl quaternary amine based resin for PFOA) the resins in units of mass of fluorochemical adsorbed per mass of adsorbent are a factor of 35 times greater than the adsorption capacity of granular activated carbon. This allows for the treatment of larger volumes of water using these ion exchange resins rather than granular activated carbon.

Due to the higher adsorption capacity of the ion exchange resins as compared to granular activated carbon, for a water treatment system having a given amount of adsorbent, the effective treatment time or volume of water treated by the system will be greater when operated using ion exchange resins rather than granular activated carbon alone. This was true only for resins having quaternary amine functional groups and macroporous, or highly cross-linked resin bead substrates (e.g., Dow NSR-1 and PSR-3 resins). Gel-type resins, and/or resins without quaternary amine functionalities, and/or quaternary amine functionalities with fewer than two carbon alkyl groups perform adequately but not excessively better than granular activated carbon.

Additionally, the ion exchange resins of the present invention can be more effective than granular activated carbon due, in part, to the more uniform size distribution of the ion exchange resins as compared to the actived carbon. This results in a steeper break-though curve for the given compound of interest and may extend the operating time (or volume of water treated) for a given mass of resin.

## EXAMPLES

Details of additional embodiments of the invention are provided in the following nonlimiting examples.

### Examples 1-5

**Procedure 1: Batch Isotherm Method**

For each adsorbent listed in Table 1, solutions of the given adsorbents in test water were prepared in 60 mL plastic centrifuge tubes. Solutions were prepared at four to five different adsorbent concentrations in water. Two experimental water samples were prepared a 'ground water' sample (Table 2) and a 'surface water' sample (Table 3). The acids which ionize to PFBA, PFBS, PFOA, and PFOS may be obtained from VWR, West Chester , PA. The mixture of water (ground water or surface water) and adsorbent was prepared and placed on a shaker and equilibrated for 34 to 95 hours at 20°C. The samples were then centrifuged and a sample of the supernatant solution was saved for analysis using liquid chromatography / mass spectroscopy (LC/MS).

The adsorption capacity of the different adsorbents was determined using the measured adsorbent dosages and the difference between the initial and equilibrium measured concentrations of fluorochemicals at each ion exchange resin dose.

The calculations are as follows:

$C_{intial}$ = initial concentration (ng/mL) of a given compound present in the water prior to the adsorption experiment.
$C_{eq}$ = equilibrium concentration (ng/mL) of a given compound present in supernatant after exposure of the water to the adsorbent.
$V$ = volume (mL) of water in of the centrifuge tube.
$M_{ads}$ = mass (gm) of adsorbent in the centrifuge tube.
$M_{FC}$ = mass (ng) of fluorochemical adsorbed to the adsorbent.

Where,

$$M_{FC} = V \times (C_{initial} - C_{eq})$$

and,
$C_s$ = the adsorbed concentration (ng/gm) of the given compound.
Where,

$$C_s\,(\text{ng/gm}) = \left(\frac{M_{FC}}{M_{ads}}\right)$$

An isotherm plot of the form log $C_s$ versus log $C_{eq}$ can be prepared from these data. The slope of this plot has an equation of the form:

$$\log C_s = \log K + \frac{1}{n}\log C_{eq}$$

Where
$K$ = the equilibrium adsorption coefficient and is determined from the Y-intercept of the plot,
$1/n$ = the slope of the plot. Should $n$ = 1 the isotherm is said to be linear.

Individual isotherm plots were prepared for the adsorption of PFHxS, PFOA, and PFOS to several adsorbents.

**Table 1**

| Materials (Examples 1-5) | | |
|---|---|---|
| **Adsorbent** | **Functionality** | **Matrix** |
| Dowex 1 | Quaternary amine (trimethylamine) | Gel |
| Dowex NSR1 | Quaternary amine (triethylamine) | Macroporous |
| Dowex PSR2 | Quaternary amine (tri-n-butylamine) | Gel |
| Dowex PSR3 | Quaternary amine (tri-n-butyl amine) | Macroporous |
| Dowex M43 | Tertiary amine | Macroporous |
| Dowex Monosphere 77 | Tertiary amine | Macroporous |
| XUS-43594 | n-methyl-D-glucamine | Macroporous |
| XUS-43600 | thiouronium | macroporous |
| Calgon F600 | Virgin granular activated carbon | N/A |
| Norit 830 RS | Regenerated granular activated carbon | N/A |

**Table 2**

| Initial concentrations of fluorochemicals in water (ground water) | | |
|---|---|---|
| **Compound** | **Avg. Concentration (ng/mL)** | **Residual StandardDeviation (RSD) (%)** |
| PFBA | 114 | 6% |
| PFBS | 18 | 5% |
| PFOA | 103 | 6% |
| PFOS | 16 | 10% |

**Table 3**

| Initial concentrations of fluorochemicals in water (surface water) | | |
|---|---|---|
| | Average Concentration (ng/mL) | |
| | Average | RSD |
| PFHxS | 318 | 6% |
| PFOS | 1,705 | 6% |

**Example 1:**

Solutions of adsorbents listed in Table 1 were prepared and tested according to Procedure 1 using water formulated as in Table 2. The concentrations of the adsorbents were as recited in Table 4. The Calgon F600 adsorbent (activated carbon) was included as a comparative.

**Table 4**

| Vial preparation | | | |
|---|---|---|---|
| Vial | Nominal Dry Adsorbent Mass (mg) | Water Volume (mL) | Nominal Adsorbent Concentration (mg/L) |
| 1 | 20 | 30 | 667 |
| 2 | 50 | 30 | 1,667 |
| 3 | 100 | 30 | 3,333 |
| 4 | 1000 | 30 | 33,333 |

Isotherms for PFOA and PFOS are set forth in Figures 2 and 5.

**Example 2:**

Solutions of each of the adsorbents Dow NSR-1, Dow PSR-2, Dow PSR-3, and the Calgon F600 activated carbon were prepared and tested according to Procedure 1 using the water formulated as in Table 2. The concentrations of the adsorbents were as recited in Table 5. The Calgon F600 adsorbent (activated carbon) was included as a comparative.

**Table 5**

| Vial preparation | | | |
|---|---|---|---|
| Vial | Nominal Dry Adsorbent Mass (mg) | Water Volume (mL) | Nominal Adsorbent Concentration (mg/L) |
| 1 | 4 | 30 | 133 |
| 2 | 30 | 30 | 1000 |
| 3 | 150 | 30 | 5000 |
| 4 | 3000 | 30 | 100000 |

Isotherms for PFOA and PFOS are set forth in Figures 2, 4 and 5.

**Example 3:**

Solutions of each of the adsorbents Dow NSR-1, Dow PSR-2, Dow PSR-3, and the Calgon F600 were prepared and tested according to Procedure 1 using the water as in Table 2. The concentrations of the adsorbents were as recited in Table 6. The Calgon F600 adsorbent (activated carbon) was included as a comparative.

Isotherms for PFOA and PFOS are set forth in Figures 2, 4 and 5.

**Table 6**

| Vial preparation | | | |
|---|---|---|---|
| **Vial** | **Nominal Dry Adsorbent Mass (mg)** | **Water Volume (mL)** | **Nominal Adsorbent Concentration (mg/L)** |
| 1 | 1 | 30 | 33 |
| 2 | 10 | 30 | 333 |
| 3 | 50 | 30 | 1,667 |
| 4 | 1000 | 30 | 33,333 |

**Example 4:**

Solutions of each of the adsorbents Dowex PSR 2, Calgon F600 and Norit 830RS were prepared and tested according to Procedure 1 using the water formulated as in Table 3. The concentrations of the adsorbents were as recited in Table 7. The Calgon F600 and the Norit 830RS adsorbents (activated carbon) were included as comparatives.

Isotherms for $PFH_xS$ and PFOS are set forth in Figures 3 and 6.

**Table 7**

| Vial preparation | | | | |
|---|---|---|---|---|
| **Vial** | **Adsorbent Concentration (mg/L)** | **Adsorbent Mass (g)** | **Adsorbent Mass (mg)** | **Volume of Water (mL)** |
| 0 | 0 | 0 | 0 | 30 |
| 1 | 200 | 0.006 | 6 | 30 |
| 2 | 2,000 | 0.06 | 60 | 30 |
| 3 | 10,000 | 0.3 | 300 | 30 |
| 4 | 200,000 | 3 | 3000 | 15 |
| 5 | 400,000 | 6 | 6000 | 15 |

**Example 5:**

Three ion exchange resins or adsorbents were used: Dowex 1, Dow NSR-1, and Dow PSR-2. Three ion exchange columns were prepared, each having a series of sampling ports A through N with a distance of 5 cm between each sampling port. The length of the packed bed inside each column was 71 cm and the diameter of each column was 3.2 cm. The empty volume of each column was 571 mL.

Column tests were conducted by first hydrating individual ion exchange resins for 72 hours using treated water prepared from a Milli-Q water purification system obtained from Millipore Corporation of Billerica, Massachusetts. Each ion exchange resin was placed in a clean 2L bottle with approximately 1.2L of the purified water. Individual columns were filled by pumping purified water in an up-flow mode (*i.e.* from the bottom of the column out through the top of the column) and adding a slurry of the hydrated ion exchange resin in purified water to the top of the column. The slurry gently settled to the bottom of the column and care was taken to allow the bed to pack homogenously with the water level kept above the top of the ion exchange resin bed. The ion exchange adsorbent bed was packed from the bottom of the column up to Port A. The space between the top of the column to Port A was filled with a non-woven polyethylene plastic wool material to prevent the top of the bed from deforming due to the energy of the influent water.

The water used for the column study was the water of Table 2. The experiment was started by pumping fluorochemical containing water from a 55 gallon drum to the top of a column using a model QD FMI pump (Fluid Metering Inc., Syosset NY). A portion of the water that did not flow through the column was allowed to over-flow the column head and flow back into the 55 gallon drum to provide a constant column head pressure. The flow rate of water through the column was nominally 40 mL/min. Samples could be removed from the system at the column influent and effluent locations as well as at the sampling ports A-N.

The column experiment was run over a 10 day period. Within one day of start-up it was noted that the columns

became discolored with a brown-orange color. It was believed that this discoloration was due primarily to the precipitation of $Fe(OH)_3$. An analysis of the influent water and the non-woven wool material at the top of the bed did indicate the presence of significant amounts of Ca, Fe, and Mn.

The PFBA traveled through the column at the greatest velocity. The ability of the different ion exchange resins (as compared to granulated carbon) to remove this compound is summarized in Table 8. The velocities at which the breakthrough curve of PFBA traveled through the column are presented in Table 8 and were calculated by assuming the average distance that the breakthrough curve has traveled is the distance at which the concentration of PFBA is 50% of the influent concentration. From Table 8, the Dow PSR-2 is estimated to allow for a factor of 3.3 times longer operation (i.e. treat 3.3 times more water) than the Calgon F600 activated carbon, included as a comparative.

**Table 8**

| Estimated removal time for PFBA in groundwater | | |
|---|---|---|
| Adsorbent | Velocity of PFBA MTZ (ft/day) | Estimated Days of Operation at Full Scale[a] |
| F600 | 0.11 | 90[b] days |
| Dowex 1 | 0.16 | 42 |
| Dow NSR 1 | 0.059 | 116 |
| Dow PSR 2 | 0.033 | 208 |
| [a]Assume adsorbent used in a single Calgon Model 10 adsorber having 6.82 ft bed depth and operated until 50% breakthrough.<br>[b]Could run up to 90 days based on another method to estimate operation time. | | |

## Examples 6-23

Materials used for the preparation of Ion exchange resins in Examples 6-20 are set forth in Table 9.

**Table 9**

| Materials (Examples 6-20) | |
|---|---|
| **Dow XVR** | chloromethylated styrene- divinyl benzene crosslinked resin, Dow Chemical, Midland Michigan. |
| **Dowex 66** | N,N-dimethylamino methylated styrene-divinyl benzene crosslinked resin, Dow Chemical, Midland Michigan |
| **Tri-n-hexylamine** | Alfa Aesar, Ward Hill, MA |
| **Tri-n-octylamine** | Alfa Aesar, Ward Hill, MA |
| **Diisopropylethylamine ("DIPEA")** | Sigma-Aldrich, Milwaukee, WI |
| **1-bromohexane, 1-chlorohexane, 1-bromododecane, 1-chlorododecane, 1-chlorohexadecane, and 1-bromooctadecane** | Sigma-Aldrich Milwaukee, WI. |
| **N,N-dimethyl formamide (DMF)** | EMD Chemicals Gibbstown, NJ |
| **N,N-dimethyl acetamide (DMAc)** | EMD Chemicals Gibbstown, NJ |
| **Isopropanol** | EMD Chemicals Gibbstown, NJ |
| **Dichloromethane** | EMD Chemicals Gibbstown, NJ |
| **Methyl-t-butyl ether** | EMD Chemicals Gibbstown, NJ. |
| **$C_6F_{13}CH_2CH_2OH$** | Clariant Corp., Mount Holly, NC |
| **Perflorobutylsulfonic acid fluoride (PBSF)** | 3M Company, St Paul. MN |
| **HFE-7100** | Hydrofluoroether ($C_4F_9OCH_3$), 3M Company, St Paul. MN |
| **$C_4F_9SO_2N(CH_3)H$** | Prepared according to Example 1 of U.S. Patent 2,809,990, using methylamine and PBSF |

**Example 6**:

An ion exchange resin was prepared. A 250mL round bottom equipped with magnetic stirbar was charged with Dow XVR chloromethyl styrene resin, 30.0g (66 meq , 2.2 meq/g), tri-n-octylamine, 23.34g (66 meq), and 150mL of N, N-dimethylformamide, and placed in a heating bath at 90°C, with stirring, under nitrogen for 48 hours. The resin was isolated from the reaction mixture by filtering off the solvent using a 'C' porosity fritted Buchner funnel, followed by washing of the resin successively with about 100 mL water, 50 mL isopropanol, 100 mL water, and 250 mL methyl-t-butyl ether, and drying the resin for about 30 min at 120°C. Starting materials and reaction conditions are summarized in Table 10.

**Examples 7 - 16:**

Ion exchange resins were prepared using a procedure similar to that described in Example 6. Starting materials and reaction conditions are given in Table 10.

**Example 17:**

Ion exchange resin was prepared in a two step procedure including (i) the synthesis of a functional group intermediate and (ii) its subsequent reaction with the resin to form a quaternary amine.

(i) Synthesis of functional group intermediate N-2-Dimethylaminoethyl-N-methylperfluorobutanesulfonamide - {$C_4F_9SO_2$-N($CH_3$)-$CH_2CH_2$-N($CH_3$)$_2$}- A mixture of 62.6g (0.163mol) N-methylperfluorobutanesulfonamide, 28.8g (0.2 mol) 2-dimethylaminoethyl chloride hydrochloride (Aldrich Chemical), and 100 mL tetrahydrofuran was treated with 40g (0.5 mol) 50% sodium hydroxide in water and heated to reflux. After 2.5 hr, analysis by gas/liquid chromatography showed complete conversion and the mixture was washed with water, extracted with methylene chloride. The dried organic layer was concentrated and one-plate distilled to 45.0g (0.119mol, 59%) of a pale yellow solid, bp 120°C/0.2 mmHg.

(ii) Synthesis of quaternary amine ion exchange resin - A 250 mL round bottom flask was equipped with magnetic stir bar, reflux condenser and $N_2$ inlet and was charged with DOW-XVR resin (5g, 0.01 moles), $C_4F_9SO_2$-N ($CH_3$)-$CH_2CH_2$-N($CH_3$)$_2$ (1) (3.84 g, 0.01 moles), 25 g of dry DMF and DIPEA (1.2925g, 0.01 moles). The reaction mixture was heated at 90°C for 48 hours. The functionalized solid was washed with HFE-7100, isopropanol, methylene chloride and water (50g x 2 times) and dried in an air oven at 80°C for 48 hours. Starting materials and reaction conditions are summarized in Table 10.

**Example 18:**

Ion exchange resin was prepared in a two step procedure including (i) the synthesis of a functional group intermediate and (ii) its subsequent reaction with the resin to form a quaternary amine.

(i) Synthesis of functional group intermediate: $C_6F_{13}CH_2CH_2OSO_2CH_3$ ($C_6F_{13}CH_2CH_2OMs$) - A 500 mL 3-neck round bottom flask was fitted with a mechanical stirrer and a nitrogen inlet tube connected to a bubbler. The flask was charged with $C_6F_{13}CH_2CH_2OH$ (72.86 g), triethylamine (23.27 g), and tert-butyl methyl ether (121.29 g). The flask was cooled in an ice bath with the contents under a nitrogen atmosphere. The flask was fitted with an addition funnel, and then methanesulfonyl chloride (25.20 g) was added via the funnel over approximately a time period of 120 minutes. The mixture was allowed to warm to room temperature overnight. The mixture was then washed with aqueous IN HCl (120 g) and then with 2 weight percent aqueous sodium carbonate (120 g). The mixture was dried over anhydrous magnesium sulfate. The mixture was then filtered. Solvent removal was accomplished using a rotary evaporator to provide an intermediate product as a solid.

(ii) The intermediate product was reacted to provide a quaternary amine ion exchange resin. The synthesis was similar to that described in Example 17, and the starting materials and reaction conditions are given in Table 10.

**Example 19:**

Ion exchange resin was prepared in two separate steps, (i) the synthesis of the functional group intermediate and (ii) its subsequent reaction with the resin to form the quaternary amine. The procedure was similar to that described in the preparation of Example 18. Starting materials and reaction conditions are given in Table 10.

**Example 20:**

Ion exchange resin was prepared as in Example 6. Starting materials and reaction conditions are given in Table 10.

**Example 21:**

Example 21 was a Dowex PSR3 adsorbent.

**Example 22:**

Example 22 was a Purolite A530E adsorbent obtained from Purolite Company of Philadelphia, PA.

**Example 23:**

Example 23 was a Silicycle TBA chloride adsorbent obtained from Silicycle of Quebec, Canada.

**Table 10**

| Example | Starting Resin | Mass of Resin (g) | Nucleophile or Halide | Equivalents reactant/ functional group | Solvent | Amount of solvent (g) | Reaction temperature (C) |
|---|---|---|---|---|---|---|---|
| 6 | Dow XVR chlormethyl styrene | 30 | tri-n-octylamine | 1 | DMF | 150 | 90 |
| 7 | Dow XVR chlormethyl styrene | 30 | tri-n-octylamine | 2 | DMF | 150 | 90 |
| 8 | Dow XVR chlormethyl styrene | 30 | tri-n-hexylamine | 2 | DMF | 150 | 90 |
| 9 | Dowex 66 | 20 | $C_6H_{13}Cl$ | 1.3 | DMF | 60 | 90 |
| 10 | Dowex 66 | 20 | $C_{12}H_{35}Cl$ | 1.3 | DMF | 60 | 90 |
| 11 | Dowex 66 | 20 | $C_{16}H_{33}Cl$ | 1.3 | DMF | 60 | 90 |
| 12 | Dow XVR chlormethyl styrene | 30 | tri-n-hexylamine | 1.3 | DMF | 90 | 90 |
| 13 | Dowex 66 | 30 | $C_6H_{13}Br$ | 1.3 | DMF | 60 | 90 |
| 14 | Dowex 66 | 30 | $C_{12}H_{35}Br$ | 1.3 | DMF | 60 | 90 |
| 15 | Dowex 66 | 30 | $C_{18}H_{37}Br$ | 1.3 | DMF | 60 | 90 |
| 16 | Dow XVR chlormethyl styrene | 30 | tri-n-hexylamine | 1.3 | DMF | 90 | 120 |
| 17 | Dow XVR chlormethyl styrene | 5 | $C_4F_9SO_2N(CH_3)CH_2CH_2N(CH_3)_2$ | 1 | DMF | 90 | 90 |
| 18 | Dowex 66 | 15 | $MsOCH_2CH_2C_6F_{13}$ | 1 | DMF | 100 | 90 |
| 19 | Dowex 66 | 7.5 | $MsOCH_2CH_2C_6F_{13}$ | 1 | DMAc | 90 | 140 |

(continued)

| Example | Starting Resin | Mass of Resin (g) | Nucleophile or Halide | Equivalents reactant/ functional group | Solvent | Amount of solvent (g) | Reaction temperature (C) |
|---|---|---|---|---|---|---|---|
| 20 | Dow XVR chlormethyl styrene | 30 | tri-n-hexylamine | 2 | DMF | 90 | 90 |

**Characterization of Resins (Examples 6 - 23)**

**Procedure 2: Adsorption Capacities**

Solutions of the adsorbents of Examples 6 - 23 were prepared. Adsorbent and water were placed in plastic centrifuge tubes to provide a range of adsorbent concentrations in water. All tubes contained the same initial concentration of fluorochemicals in water. The tubes containing a mixture of water and adsorbent were placed on an orbital shaker and shaken for at least 44 to 48 hours at 20°C. Thereafter, the adsorbent samples were centrifuged. A sample of the supernatant solution was taken and analyzed by LC/MS to determine the concentration of the individual fluorochemicals in water nominally equilibrated with the adsorbent. Three centrifuge tubes were filled with the same initial solution but contained no adsorbent. These samples were used to determine the initial concentration. From these data the mass of a given fluorochemical adsorbed to the adsorbent was determined and the value normalized to the mass of dry adsorbent added to the centrifuge tube. These data were used to construct an isotherm plot of the quantity (adsorbed mass/ adsorbent mass) versus apparent equilibrium fluorochemical concentration. The target adsorbent dosages are summarized in Table 11.

**Table 11**

| Nominal Adsorbent Dosages for Batch Isotherm Studies | | |
|---|---|---|
| **Adsorbent Dose (mg/L)** | **Adsorbent Dose (g)** | **Adsorbent Dose (mg)** |
| 0 | 0 | 0 |
| 100 | 0.003 | 3 |
| 1,000 | 0.03 | 30 |
| 5,000 | 0.3 | 300 |
| 100,000 | 3 | 3000 |
| | | |
| Initial water volume | 30 mL | |

Samples were analyzed by LC/MS using electrospray ionization and operating in negative ion mode. The mass to charge ratio (m/z) used to quantify the concentration of an individual fluorochemical in water is summarized in Table 12. For each batch of isotherm experiments, calibration curves were prepared in water such that the concentration range would bracket the range of fluorochemical concentrations expected in the given experiment. Over the five batches of isotherm experiments, the calibration curves ranged between 0.01 ng/mL to500 ng/mL for each target fluorochemical i.e. PFBA, PFOA, PFBS, $PFH_xS$ or PFOS, etc..

**Table 12**

| Mass to charge ratios for compounds in water | |
|---|---|
| **Compound** | **m/z** |
| PFBA | 213 |
| PFBS | 299 |
| PFOA | 413 |

(continued)

| Mass to charge ratios for compounds in water | |
|---|---|
| **Compound** | **m/z** |
| PFOS | 499 |

For each sample a lab matrix spike (LMS) was prepared by taking a second aliquot of sample and spiking (*i.e.* fortifying) it with known amount of a given fluorochemical. The spike level was either a low or high spike. For samples that were expected to have low amounts of fluorochemicals; the LMS sample was spiked with relatively low levels of fluorochemicals. The spike amount represents the expected concentration that results from spiking of a given mass of fluorochemical into the given sample volume. For example a low spike of 3 ppb indicates that in the absence of any given endogenous fluorochemical, the concentration of the given fluorochemical in the LMS will be 3 ppb. Should endogenous levels of fluorochemical exist, the expected concentration would be the endogenous concentration plus that spiked concentration. For example should the endogenous level be 2 ppb and the spike level be 3 ppb, the concentration of the LMS would be 2 ppb + 3 ppb = 5 ppb.

The recovery of fluorochemical in an LMS was calculated as follows:

$$\text{Recovery}(\%) = \frac{C_{LMS}}{\left(C_{spike} + C_{endogeneous}\right)} \times 100$$

Where,

$C_{LMS}$ = the concentration (ng/mL) of a given chemical observed in the analysis of the LMS sample.

$C_{spike}$ = the spike level (ng/mL) that results from spiking a sample solution with a known amount of a given chemical.

$C_{endogenous}$ = the endogenous concentration (ng/mL) of fluorochemical as determined from the un-spiked sample.

In this study if the recovery of a LMS was outside the range of 70 to 130%, the sample data were rejected. The adsorption capacity of the different adsorbents was determined using the measured adsorbent dosages and the difference between the initial and equilibrium measured concentrations of fluorochemicals at each adsorbent dose. The calculations are as follows:

$C_{intial}$ = initial concentration (ng/mL) of a given compound present in the water prior to the adsorption experiment/

$C_{eq}$ = equilibrium concentration (ng/mL) of a given compound present in supernatant after exposure of the water to the adsorbent.

$V$ = volume (mL) of water in the centrifuge tube.

$M_{ads}$ = mass (gm) of adsorbent in the centrifuge tube.

$M_{FC}$ = mass (ng) of fluorochemical adsorbed to the adsorbent.

Where,

$$M_{FC} = V \times \left(C_{initial} - C_{eq}\right)$$

and,

$C_s$ = the adsorbed concentration (ng/gm) of the given compound. Where,

$$C_s = \left(\frac{M_{FC}}{M_{ads}}\right)$$

A Freundlich plot of the form log $C_s$ versus log $C_{eq}$ can be prepared from these data. The slope of this plot has an equation of the form:

$$\log C_s = \log K + \frac{1}{n} \log C_{eq}$$

Where
$K$ = the equilibrium adsorption coefficient and is determined from the Y-intercept of the plot,
$1/n$ = the slope of the plot. Should $n$ = 1 the isotherm is said to be linear.

The removal efficiencies at a given adsorbent concentration are set forth in Table 13 for target fluorochemicals from the groundwater samples described in Table 2, for the adsorbents of Examples 6-16, 18, 19 and those used for Examples 21-23. The Calgon F600 adsorbent (activated carbon) was included as a comparative. Multiple determinations were made for each of the samples.

**Table 13**

| | | % REMOVAL | | | |
|---|---|---|---|---|---|
| **Example (Adsorbent)** | **Adsorbent concentration in ground water (gm/L)** | **PFBA** | **PFBS** | **PFOA** | **PFOS** |
| Comparative (Calgon F600) | 0.16 | 25% | 39% | 36% | 28% |
| Comparative (Calgon F600) | 1.0 | 71% | 92% | 94% | 97% |
| Comparative (Calgon F600) | 11 | 98% | 100% | 99% | --- |
| Comparative (Calgon F600) | 97 | 100% | 100% | --- | 100% |
| | | | | | |
| 21 | 0.06 | 20% | 20% | 19% | 29% |
| 21 | 0.19 | 54% | 62% | 59% | 69% |
| 21 | 2.9 | 98% | 99% | 98% | --- |
| 21 | 30 | 100% | --- | 100% | --- |
| | | | | | |
| 6 | 0.08 | 27% | 56% | 56% | 70% |
| 6 | 0.42 | 82% | 98% | 97% | 98% |
| 6 | 4.5 | 99% | 100% | 100% | --- |
| 6 | 47 | 100% | --- | --- | --- |
| | | | | | |
| 7 | 0.04 | 35% | 75% | 70% | 81% |
| 7 | 0.36 | 87% | --- | 97% | 99% |
| 7 | 4.1 | 100% | 100% | --- | --- |
| 7 | 45 | 100% | --- | --- | 100% |
| | | | | | |
| 8 | 0.07 | 60% | 92% | 88% | 93% |
| 8 | 0.31 | 93% | --- | 99% | 99% |
| 8 | 4.1 | 100% | 100% | 100% | 100% |
| 8 | 40 | 100% | --- | --- | 100% |
| | | | | | |
| 9 | 0.08 | 8% | 16% | 16% | 17% |
| 9 | 0.27 | 57% | 68% | 62% | 73% |
| 9 | 3.4 | 98% | 100% | 99% | --- |

(continued)

| | | % REMOVAL | | | |
|---|---|---|---|---|---|
| **Example (Adsorbent)** | **Adsorbent concentration in ground water (gm/L)** | **PFBA** | **PFBS** | **PFOA** | **PFOS** |
| 9 | 34 | 100% | 100% | 100% | --- |
| | | | | | |
| 10 | 0.08 | 22% | 31% | 31% | 30% |
| 10 | 0.33 | 50% | 64% | 60% | 69% |
| 10 | 3.6 | 99% | 100% | 100% | --- |
| 10 | 38 | 100% | 100% | 100% | 98% |
| | | | | | |
| 11 | 0.06 | 22% | 40% | 38% | 53% |
| 11 | 0.33 | 57% | 69% | 67% | 81% |
| 11 | 3.8 | 99% | 100% | --- | --- |
| 11 | 37 | 100% | 100% | --- | --- |
| | | | | | |
| 12 | 0.13 | 29% | 50% | 44% | 54% |
| 12 | 0.40 | 85% | 93% | 90% | 90% |
| 12 | 4.6 | 98% | 99% | 98% | 100% |
| 12 | 46 | 100% | --- | --- | --- |
| 13 | 0.11 | 7% | 17% | 12% | 20% |
| 13 | 0.34 | 55% | 66% | 63% | 70% |
| 13 | 3.9 | 97% | 100% | 99% | 100% |
| 13 | 40 | 99% | 100% | 99% | --- |
| | | | | | |
| 14 | 0.13 | 2% | 4% | 3% | 30% |
| 14 | 0.24 | 54% | 70% | 91% | --- |
| 14 | 4.0 | 98% | 100% | 99% | 97% |
| 14 | 41 | 100% | 100% | --- | --- |
| | | | | | |
| 15 | 0.07 | 14% | 62% | 62% | 67% |
| 15 | 0.44 | 74% | --- | 99% | 100% |
| 15 | 4.4 | 96% | 100% | 100% | --- |
| 15 | 44 | 100% | 100% | 100% | --- |
| | | | | | |
| 16 | 0.08 | 48% | 93% | 91% | 94% |
| 16 | 0.33 | 87% | 98% | 98% | 98% |
| 16 | 3.6 | 99% | 100% | 100% | - |
| 16 | 37 | 100% | 100% | 99% | 86% |
| | | | | | |

(continued)

| | | % REMOVAL | | | |
|---|---|---|---|---|---|
| Example (Adsorbent) | Adsorbent concentration in ground water (gm/L) | PFBA | PFBS | PFOA | PFOS |
| 18 | 0.04 | 17% | 32% | 26% | 38% |
| 18 | 0.13 | 40% | 56% | 53% | 62% |
| 18 | 3.3 | 94% | 99% | 98% | --- |
| 18 | 36 | 95% | 100% | --- | --- |
| | | | | | |
| 19 | 0.05 | 6% | 14% | 15% | 19% |
| 19 | 0.25 | 59% | 72% | 70% | --- |
| 19 | 3.3 | 98% | 100% | 99% | --- |
| 19 | | | | | |
| 19 | 35 | 98% | 100% | --- | --- |
| | | | | | |
| Comparative (Calgon F600) | 0.0064 | 37% | 74% | 68% | --- |
| Comparative (Calgon F600) | 0.0298 | 94% | 100% | 100% | --- |
| Comparative (Calgon F600) | 0.3159 | 100% | 100% | 100% | --- |
| Comparative (Calgon F600) | 3.1 | 99% | 100% | 100% | --- |
| | | | | | |
| 21 PSR 3 | 0.0021 | 22% | 43% | 19% | --- |
| 21 PSR 3 | 0.0155 | 97% | 99% | 97% | --- |
| 21 PSR 3 | 0.106 | 100% | 100% | 100% | --- |
| 21 PSR 3 | 1.0048 | 100% | 100% | 100% | --- |
| | | | | | |
| 6 | 0.0018 | 27% | 70% | 60% | --- |
| 6 | 0.0126 | 92% | 99% | 99% | --- |
| 6 | 0.1499 | 100% | 100% | 100% | --- |
| 6 | 1.5047 | 100% | 100% | 100% | --- |
| | | | | | |
| 8 | 0.0039 | 83% | 100% | 98% | --- |
| 8 | 0.0151 | 99% | 100% | 100% | --- |
| 8 | 0.1247 | 100% | 100% | 100% | --- |
| 8 | 1.1749 | 100% | 100% | 100% | --- |
| | | | | | |
| 22 | 0.0029 | 40% | 72% | 52% | --- |
| 22 | 0.0152 | 91% | 99% | 97% | --- |
| 22 | 0.1448 | 100% | 100% | 100% | --- |
| 22 | 1.0145 | 100% | 100% | 100% | --- |
| 23 | 0.0029 | 0% | 0% | 0% | --- |

(continued)

| | | % REMOVAL | | | |
|---|---|---|---|---|---|
| Example (Adsorbent) | Adsorbent concentration in ground water (gm/L) | PFBA | PFBS | PFOA | PFOS |
| 23 | 0.0297 | 4% | 15% | 19% | --- |
| 23 | 0.3046 | 100% | 56% | 73% | --- |
| 23 | 3 | 100% | 97% | 99% | --- |

## Claims

1. A process for the removal of fluorochemicals from water, the process comprising:

exposing water comprising fluorochemicals to an ion exchange resin, the resin comprising an insoluble matrix having functional groups bonded thereto, the functional groups comprising quaternary amines of the formula:

$$-N(R_1R_2R_3) \qquad (I)$$

where
N is nitrogen; and
$R_1$, $R_2$ and $R_3$ are hydrocarbon groups and can be the same or different, normal, branched and/or partially or fully substituted and having a carbon chain length of $C_1$ or greater, the hydrocarbon chain optionally including polar groups; wherein the quaternary amines are selected from quaternary amines of the Formula I where at least one of the hydrocarbon groups $R_1$, $R_2$ and $R_3$ is a $C_1$ to $C_4$ alkyl group and another of $R_1$, $R_2$ and $R_3$ is a hydrocarbon group having a carbon chain length greater than $C_4$ or the quaternary amines are selected from the group consisting of: $+N(C_8H_{17})_3$, $+N(C_6H_{13})_3$, $+N(CH_3)_2(C_6H_{13})$, $+N(CH_3)_2(C_{12}H_{25})$, $+N(CH_3)_2(C_{16}H_{33})$, $+N(CH_3)_2(C_{18}H_{37})$, $+N(CH_3)_2CH_2CH_2C_6F_{13}$, $+N(CH_3)_2CH_2CH_2N(CH_3)SO_2C_4F_9$, $+N(C_4H_9)_3$, $+N(C_2H_5)_3$, and combinations of two or more of the foregoing;
maintaining the water in contact with the resin for a period of time; and
separating the water from the resin.

2. The process as defined in claim 1, wherein $R_1$, $R_2$ and $R_3$ are the same.

3. The process as defined in claim 1, wherein at least one of $R_1$, $R_2$ or $R_3$ further include a polar group selected from O, N and S.

4. The process as defined in claim 1, wherein at least one of $R_1$, $R_2$ or $R_3$ is fluorinated.

5. The process as defined in claim 1, wherein the quaternary amines are selected from the group consisting of $+N(C_8H_{17})_3$, $+N(C_6H_{13})_3$, $+N(CH_3)_2(C_6H_{13})$, $+N(CH_3)_2(C_{12}H_{25})$, $+N(CH_3)_2(C_{16}H_{33})$, $+N(CH_3)_2(C_{18}H_{37})$, $+N(CH_3)_2CH_2CH_2C_6F_{13}$, $+N(CH_3)_2CH_2CH_2N(CH_3)SO_2C_4F_9$, $+N(C_4H_9)_3$, $+N(C_2H_5)_3$ and combinations of two or more of the foregoing.

6. The process as defined in claim 1, wherein ion exchange resin comprises a difunctional resin consisting of a first quaternary amine and a second quaternary amine.

7. The process as defined in claim 6, wherein the matrix comprises polystyrene and wherein the first quaternary amine is triethyl quaternary amine and the second quaternary amine is trihexyl quaternary amine.

8. The process as defined in claim 1, wherein the matrix is selected from the group consisting of polymers, gels, clays, diatomaceous earth and combinations of two or more of the foregoing.

9. The process as defined in claim 8, wherein the polymer is polystyrene.

10. The process as defined in claim 8, wherein the gel is silica gel.

## Patentansprüche

1. Verfahren zur Entfernung von Fluorchemikalien aus Wasser, bei dem man: Fluorchemikalien umfassendes Wasser einem Ionenaustauscherharz aussetzt, wobei das Harz eine unlösliche Matrix mit daran gebundenen funktionellen Gruppen umfasst, wobei die funktionellen Gruppen quaternäre Amine der Formel:

$$-N(R_1R_2R_3) \qquad (I)$$

umfassen, wobei
N für Stickstoff steht und
$R_1$, $R_2$ und $R_3$ für Kohlenwasserstoffgruppen stehen und gleich oder verschieden, normal, verzweigt und/oder teilweise oder vollständig substituiert sein können und eine Kohlenstoffkettenlänge von $C_1$ oder mehr aufweisen, wobei die Kohlenwasserstoffkette gegebenenfalls polare Gruppen enthält; wobei die quaternären Amine aus quaternären Aminen der Formel I, wobei mindestens eine der Kohlenwasserstoffgruppen $R_1$, $R_2$ und $R_3$ für einen Kohlenwasserstoff mit einer Kohlenstoffkettenlänge von mehr als $C_4$ steht, ausgewählt sind oder die quaternären Amine aus der Gruppe bestehend aus $+N(C_8H_{17})_3$, $+N(C_6H_{13})_3$, $+N(CH_3)_2(C_6H_{13})$, $+N(CH_3)_2(C_{12}H_{25})$, $+N(CH_3)_2(C_{16}H_{33})$, $+N(CH_3)_2(C_{18}H_{37})$, $+N(CH_3)_2CH_2CH_2C_6F_{13}$, $+N(CH_3)_2CH_2CH_2N(CH_3)SO_2C_4F_9$, $+N(C_4H_9)_3$, $+N(C_2H_5)_3$ und Kombinationen von zwei oder mehr der oben aufgeführten Amine ausgewählt sind;
das Wasser über einen Zeitraum mit dem Harz in Kontakt hält und
das Wasser von dem Harz abtrennt.

2. Verfahren nach Anspruch 1, bei dem $R_1$, $R_2$ und $R_3$ gleich sind.

3. Verfahren nach Anspruch 1, bei dem mindestens eine der Gruppen $R_1$, $R_2$ und $R_3$ ferner eine aus O, N und S ausgewählte polare Gruppe umfasst.

4. Verfahren nach Anspruch 1, bei dem mindestens eine der Gruppen $R_1$, $R_2$ und $R_3$ fluoriert ist.

5. Verfahren nach Anspruch 1, bei dem die quaternären Amine aus der Gruppe bestehend aus $+N(C_8H_{17})_3$, $+N(C_6H_{13})_3$, $+N(CH_3)_2(C_6H_{13})$, $+N(CH_3)_2(C_{12}H_{25})$, $+N(CH_3)_2(C_{16}H_{33})$, $+N(CH_3)_2(C_{18}H_{37})$, $+N(CH_3)_2CH_2CH_2C_6F_{13}$, $+N(CH_3)_2CH_2CH_2N(CH_3)SO_2C_4F_9$, $+N(C_4H_9)_3$, $+N(C_2H_5)_3$ und Kombinationen von zwei oder mehr der oben aufgeführten Amine ausgewählt sind.

6. Verfahren nach Anspruch 1, bei dem es sich bei dem Ionenaustauscherharz um ein difunktionelles Harz, das aus einem ersten quaternären Amin und einem zweiten quaternären Amin besteht, handelt.

7. Verfahren nach Anspruch 6, bei dem die Matrix Polystyrol umfasst und es sich bei dem ersten quaternären Amin um quaternäres Triethylamin handelt und es sich bei dem zweiten quaternären Amin um quaternäres Trihexylamin handelt.

8. Verfahren nach Anspruch 1, bei dem die Matrix aus der Gruppe bestehend aus Polymeren, Gelen, Tonen, Diatomeenerde und Kombinationen von zwei oder mehr der oben aufgeführten Substanzen ausgewählt ist.

9. Verfahren nach Anspruch 8, bei dem es sich bei dem Polymer um Polystyrol handelt.

10. Verfahren nach Anspruch 8, bei dem es sich bei dem Gel um Kieselgel handelt.

## Revendications

1. Procédé pour l’élimination de produits chimiques fluorés de l’eau, le procédé comprenant :

    l’exposition d’eau comprenant des produits chimiques fluorés à une résine échangeuse d’ions, la résine comprenant une matrice insoluble ayant des groupes fonctionnels liés à celle-ci, les groupes fonctionnels comprenant des amines quaternaires représentées par la formule :

$$-N(R_1R_2R_3) \qquad (I)$$

où

N est l' azote ; et

$R_1$, $R_2$ et $R_3$ sont des groupes hydrocarbonés et peuvent être identiques ou différents, normaux, ramifiés et/ou partiellement ou complètement substitués et avoir une longueur de chaîne carbonée supérieure ou égale à $C_1$, la chaîne hydrocarbonée comprenant facultativement des groupes polaires ;

les amines quaternaires étant choisies parmi les amines quaternaires représentées par la formule I où au moins l'un des groupes hydrocarbonés $R_1$, $R_2$ et $R_3$ est un groupe alkyle en $C_1$ à $C_4$ et un autre de $R_1$, $R_2$ et $R_3$ est un groupe hydrocarboné ayant une longueur de chaîne carbonée supérieure à $C_4$ ou les amines quaternaires étant choisies dans le groupe constitué par: $+N(C_8H_{17})_3$, $+N(C_6H_{13})_3$, $+N(CH_3)_2(C_6H_{13})$, $+N(CH_3)_2(C_{12}H_{25})$, $+N(CH_3)_2(C_{16}H_{33})$, $+N(CH_3)_2(C_{18}H_{37})$, $+N(CH_3)_2CH_2CH_2C_6F_{13}$, $+N(CH_3)_2CH_2CH_2N(CH_3)SO_2C_4F_9$, $+N(C_4H_9)_3$, $+N(C_2H_5)_3$ et les associations de deux ou plus de deux des amines susdites ;

le maintien de l'eau en contact avec la résine pendant un certain temps ; et

la séparation de l'eau et de la résine.

2. Procédé selon la revendication 1, dans lequel $R_1$, $R_2$ et $R_3$ sont identiques.

3. Procédé selon la revendication 1, dans lequel au moins l'un de $R_1$, $R_2$ et $R_3$ comprend en outre un groupe polaire choisi parmi O, N et S.

4. Procédé selon la revendication 1, dans lequel au moins l'un de $R_1$, $R_2$ et $R_3$ est fluoré.

5. Procédé selon la revendication 1, dans lequel les amines quaternaires sont choisies dans le groupe constitué par $+N(C_8H_{17})_3$, $+N(C_6H_{13})_3$, $+N(CH_3)_2(C_6H_{13})$, $+N(CH_3)_2(C_{12}H_{25})$, $+N(CH_3)_2(C_{16}H_{33})$, $+N(CH_3)_2(C_{18}H_{37})$, $+N(CH_3)_2CH_2CH_2C_6F_{13}$, $+N(CH_3)_2CH_2CH_2N(CH_3)SO_2C_4F_9$, $+N(C_4H_9)_3$, $+N(C_2H_5)_3$ et les associations de deux ou plus de deux des amines susdites.

6. Procédé selon la revendication 1, dans lequel la résine échangeuse d'ions comprend une résine difonctionnelle constituée d'une première amine quaternaire et d'une seconde amine quaternaire.

7. Procédé selon la revendication 6, dans lequel la matrice comprend du polystyrène et dans lequel la première amine quaternaire est la triéthylamine quaternaire et la seconde amine quaternaire est la trihexylamine quaternaire.

8. Procédé selon la revendication 1, dans lequel la matrice est choisie dans le groupe constitué par les polymères, les gels, les argiles, la terre de diatomées et les associations de deux ou plus de deux des matrices susdites.

9. Procédé selon la revendication 8, dans lequel le polymère est le polystyrène.

10. Procédé selon la revendication 8, dans lequel le gel est le gel de silice.

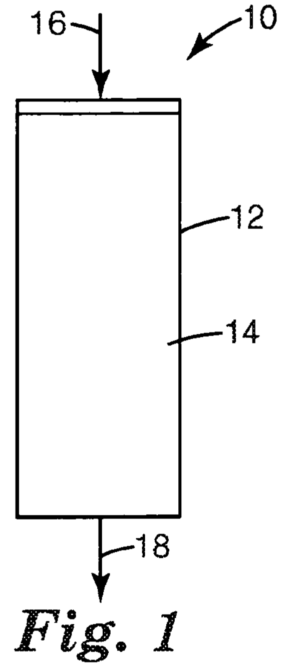
16
10
12
14
18

*Fig. 1*

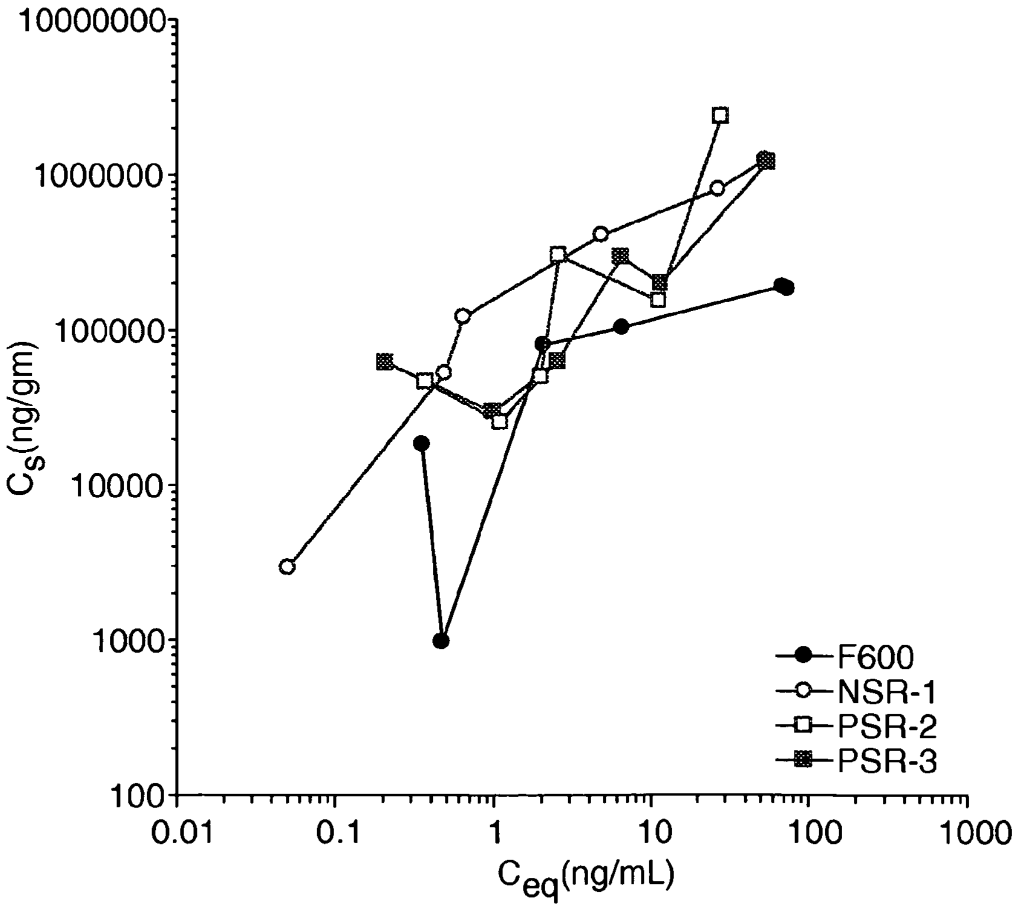
10000000
1000000
100000
10000
1000
100
$C_s$(ng/gm)
0.01
0.1
1
10
100
1000
$C_{eq}$(ng/mL)
F600
NSR-1
PSR-2
PSR-3

*Fig. 2*

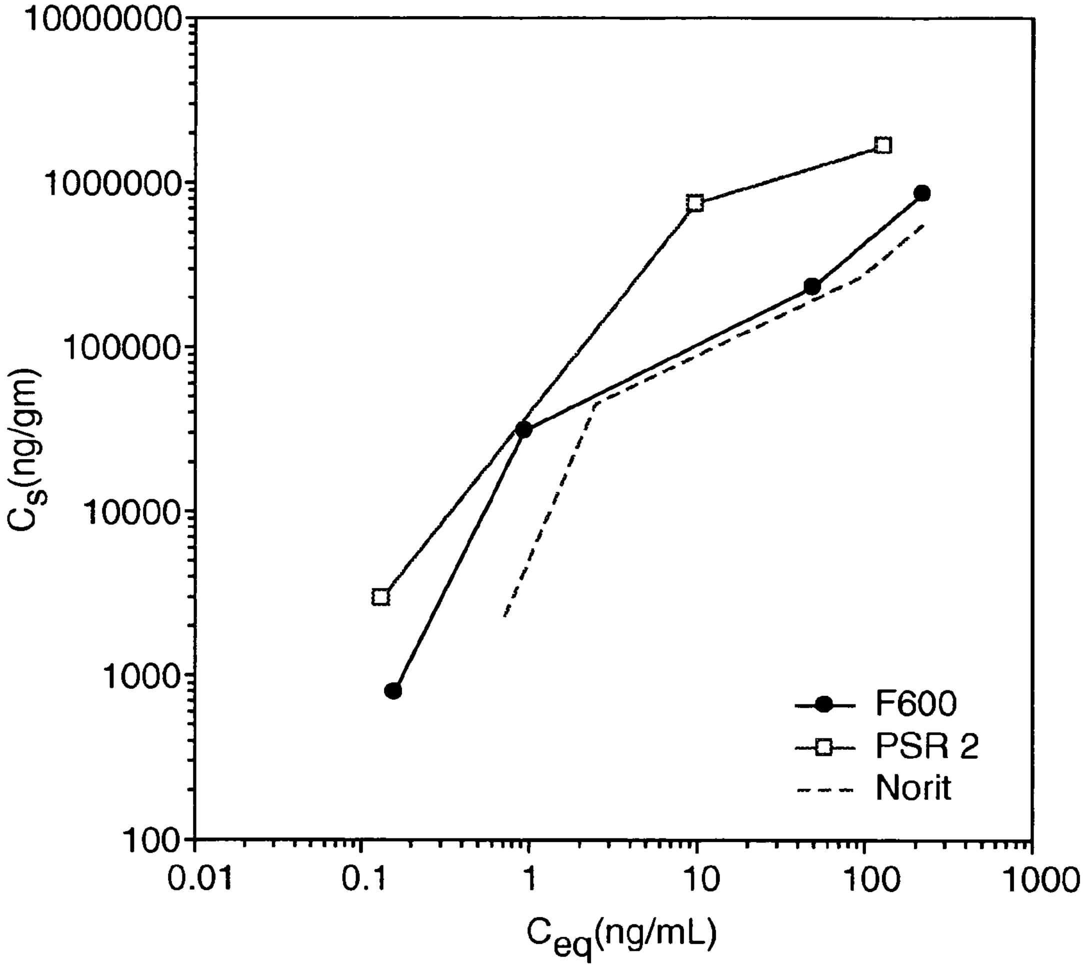
10000000
1000000
100000
10000
1000
100
$C_s$(ng/gm)
0.01
0.1
1
10
100
1000
$C_{eq}$(ng/mL)
F600
PSR 2
Norit

*Fig. 3*

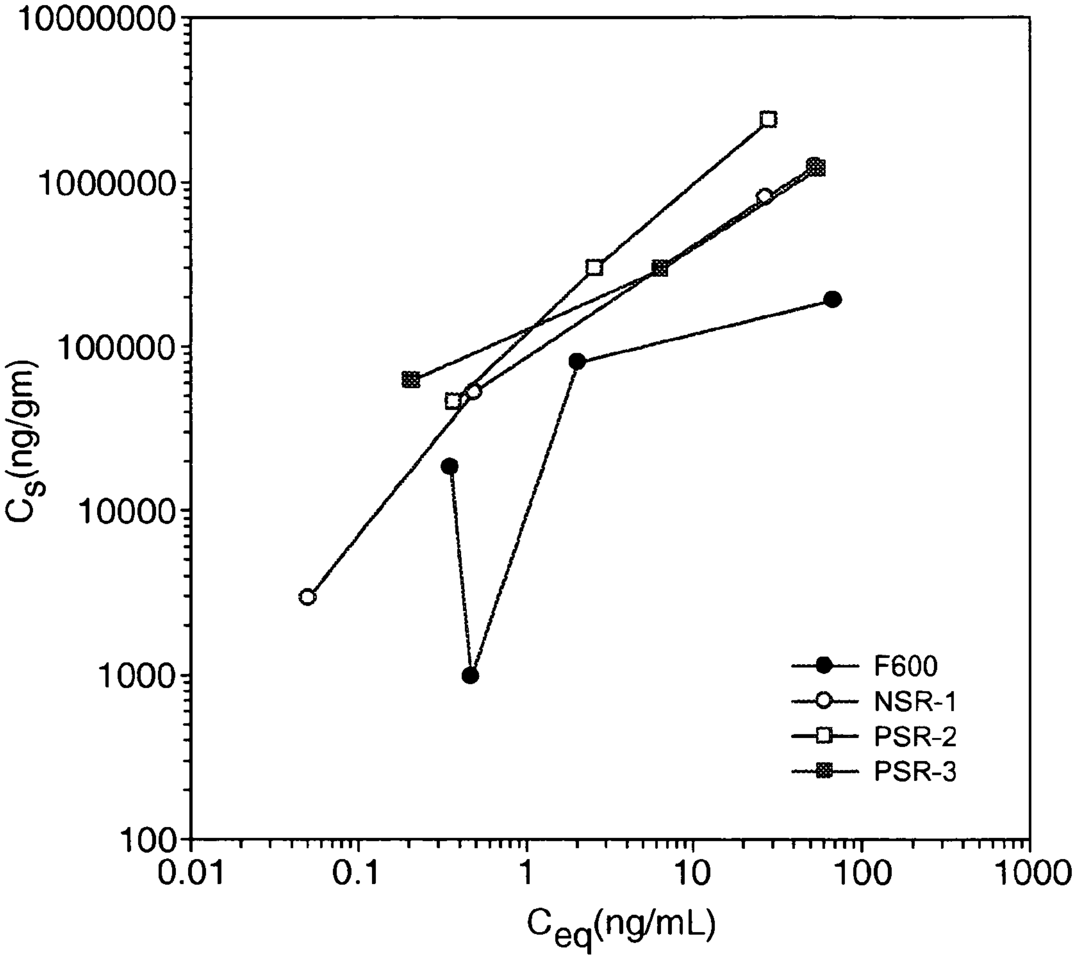
10000000
1000000
100000
10000
1000
100
$C_S$(ng/gm)
0.01
0.1
1
10
100
1000
$C_{eq}$(ng/mL)
F600
NSR-1
PSR-2
PSR-3

*Fig. 4*

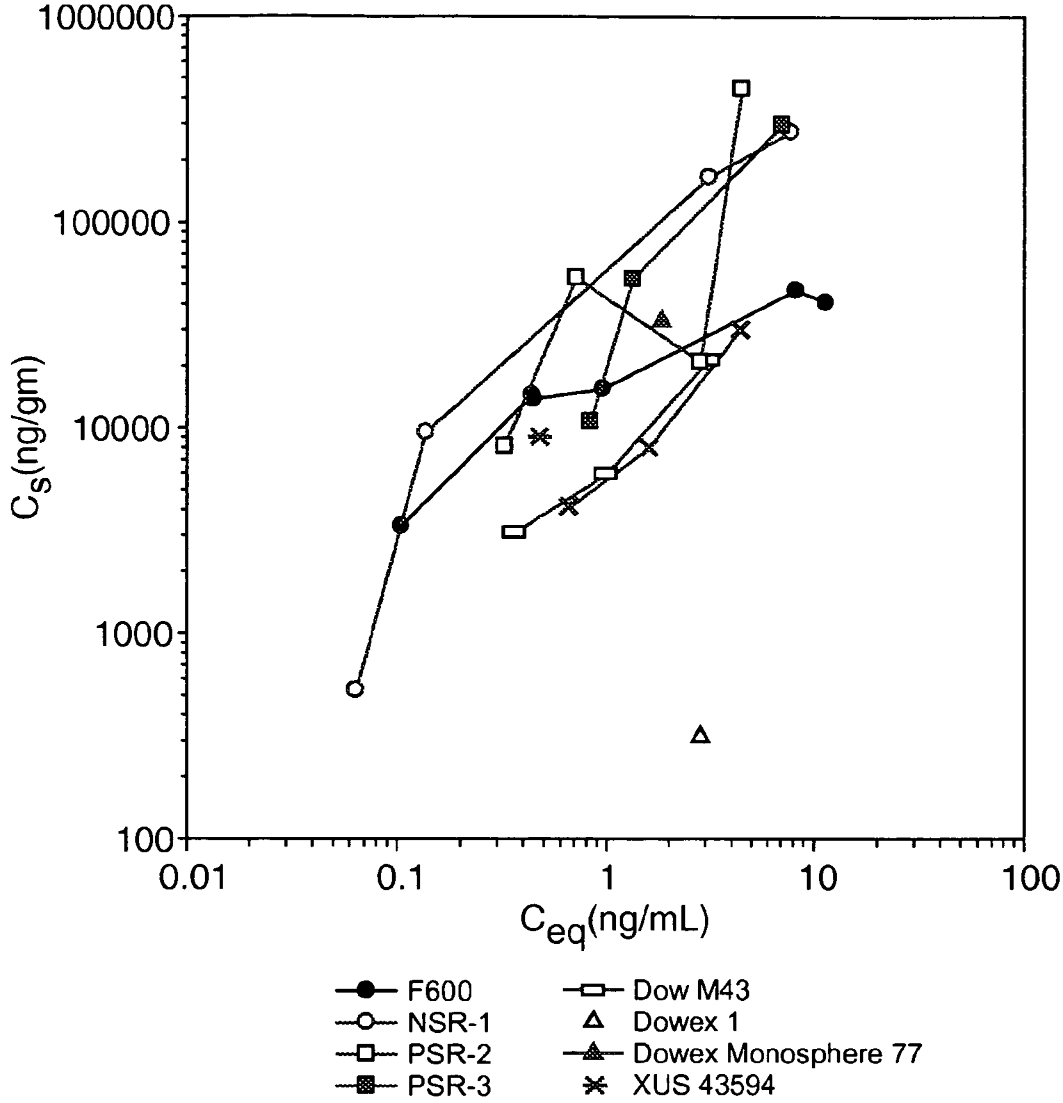
1000000
100000
10000
1000
100
Cs(ng/gm)
0.01
0.1
1
10
100
Ceq(ng/mL)
F600
NSR-1
PSR-2
PSR-3
XUS 43600
Dow M43
Dowex 1
Dowex Monosphere 77
XUS 43594

*Fig. 5*

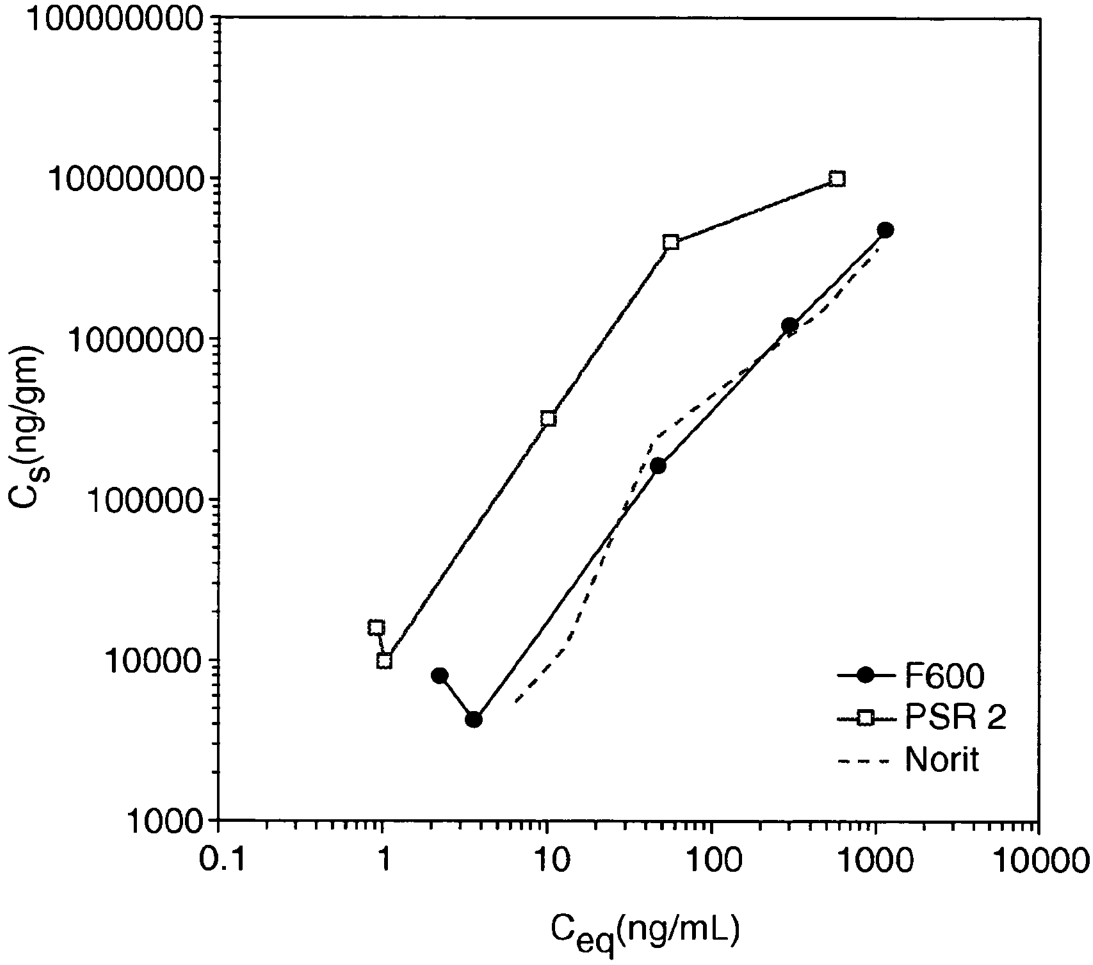
100000000
10000000
1000000
100000
10000
1000
$C_s$(ng/gm)
0.1
1
10
100
1000
10000
$C_{eq}$(ng/mL)
F600
PSR 2
Norit

*Fig. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2004000156 A
- US 2809990 A